# EUROPÄISCHE PATENTSCHRIFT

(11) **EP 3 002 148 B1**
(45) Veröffentlichungstag und Bekanntmachung des Hinweises auf die Patenterteilung: **27.06.2018**
(21) Anmeldenummer: 15186517.7
(22) Anmeldetag: 23.09.2015
(51) Int. Cl.: B60L 11/18, B60W 20/12, B60W 10/26

(54) **BETREIBEN EINER ANTRIEBSEINRICHTUNG EINES FAHRZEUGS UNTER VERWENDUNG EINER STEUERUNGSEINRICHTUNG**
OPERATION OF A DRIVE DEVICE FOR A VEHICLE USING A CONTROL DEVICE
FONCTIONNEMENT D'UN DISPOSITIF D'ENTRAINEMENT D'UN VEHICULE AUTOMOBILE A L'AIDE D'UN DISPOSITIF DE COMMANDE

(30) Priorität: 24.09.2014 DE 102014219260
(43) Veröffentlichungstag der Anmeldung: 06.04.2016
(73) Patentinhaber: Preh Car Connect GmbH, 01156 Dresden (DE)
(72) Erfinder: Kolanko, Jan, 01157 Dresden (DE)

(56) Entgegenhaltungen:
- DE-A1-102012 011 605
- US-A- 5 892 346
- US-A1- 2008 262 668
- US-A1- 2009 114 463

## Beschreibung

Die Erfindung betrifft ein Verfahren zum Betreiben einer Antriebseinrichtung eines Fahrzeugs unter Verwendung einer Steuerungseinrichtung und eine Steuerungseinrichtung zum Ausführen des Verfahrens.

Ein Fahrzeug kann ein Kraftfahrzeug sein, wie ein Personenkraftwagen, ein Lastkraftwagen oder ein Omnibus, ein Motorrad oder ein Elektrofahrrad (auch als Pedelec bekannt). Als Fahrzeug kommt aber auch ein schienengebundenes Fahrzeug, wie eine Lokomotive, ein wassergebundenes Fahrzeug, wie ein Boot oder ein Schiff, oder ein luftfahrttaugliches Fahrzeug, wie ein Motorschirm, ein Motorsegler oder ein Flugzeug, in Frage.

Das Fahrzeug kann über eine Navigationseinheit verfügen.

Unter einer Navigationseinheit kann eine Vorrichtung verstanden werden, welche einem Nutzer Informationen über eine Position eines Fahrzeugs, mit welchem die Navigationseinheit verbunden ist, bereitstellt. Ferner kann unter einer Navigationseinheit eine Vorrichtung verstanden werden, mittels derer ein Nutzer eine Route, zum Beispiel von einem ersten Ort zu einem weiteren Ort, berechnen lassen und eine Zielführung ausgeben lassen kann.

Herkömmliche Navigationseinheiten helfen einem Nutzer bei der Wegfindung zu einem gewünschten Ziel. Es ist bekannt, dass Navigationseinheiten unter Verwendung von historischen oder aktuellen Daten Routen berechnen und gegebenenfalls eine darauf basierende Zielführung ausführen, oder eine zuletzt gestartete und noch nicht beendete Zielführung fortsetzen.

Eine Navigationseinheit kann mit einem Fahrzeug derart verbunden sein, dass die Navigationseinheit in oder an dem Fahrzeug fest angebracht ist, zum Beispiel am Fahrzeug angebaut ist oder im Fahrzeug eingebaut ist. Alternativ dazu kann eine Navigationseinheit einfach von einem Fahrzeug abnehmbar sein oder einfach aus dem Fahrzeuginneren entnehmbar sein, beispielsweise als tragbares Gerät. Ferner kann eine Navigationseinheit neben mechanischen Schnittstellen auch unter Verwendung elektronischer Schnittstellen mit einem Fahrzeug verbunden sein. Die Schnittstellen können kabelgebunden oder drahtlos sein, zum Beispiel in Form von Bluetooth-Schnittstellen oder WLAN (wireless area network)-Schnittstellen. Über eine solche Schnittstelle kann eine Navigationseinheit Fahrzeugdaten empfangen, zum Beispiel Drehzahlen oder Gierraten.

Eine herkömmliche Navigationseinheit kann unter Verwendung von Landkartendaten eine Route berechnen, welche von einer Position der Navigationseinheit zu einer Zielposition führt. Die Position der Navigationseinheit wird meist unter Verwendung eines Satellitennavigationssystems bestimmt, zum Beispiel unter Verwendung von GPS, GLONASS, COMPASS oder GALILEO. Dazu empfängt die Navigationseinheit unter Verwendung einer Satellitenantenne die Signale mehrerer geostationärer Satelliten und wertet diese Signale aus. Die Zielposition wird in der Regel aus einem Ziel bestimmt, das ein Nutzer unter Verwendung einer Eingabeeinheit in die Navigationseinheit eingibt.

Die Route kann mittels einer Recheneinheit der Navigationseinheit berechnet werden, welche einen Routenberechnungsalgorithmus ausführt. Bei der Routenberechnung werden Landkartendaten verwendet, welche Objekte und den Objekten zugeordnete Informationen repräsentieren, zum Beispiel Straßen, Wege, Plätze, Eisenbahnlinien, Flüsse, Gebäude, Brücken, Geländeformen, Landesgrenzen, Parkmöglichkeiten, Raststätten, Tankstellen, Verkehrsregelungen, Ortschaften und Geschwindigkeitsbegrenzungen. Die Landkartendaten sind in der Regel in einer nichtflüchtigen Datenspeichereinheit der Navigationseinheit abgelegt, zum Beispiel auf einer CD-ROM, auf einer Festplatte oder in einem Flash-Speicher.

Die berechnete Route oder ein Abschnitt der berechneten Route kann auf einer der Navigationseinheit zugeordneten Ausgabeeinheit, zum Beispiel einem Bildschirm, angezeigt werden. Dadurch kann der Nutzer der Navigationseinheit eine räumliche Vorstellung von der Route oder von dem vor ihm liegenden Routenabschnitt entwickeln, was ihm zum Beispiel ermöglicht, Fahrmanöver vorausschauend zu planen.

Ferner kann nach der Routenberechnung eine Zielführung gestartet werden. Als Zielführung wird ein Prozess bezeichnet, der einen Nutzer der Navigationseinheit entlang der berechneten Route leitet. Während der Zielführung kann die Navigationseinheit optische und akustische Anweisungen an den Nutzer ausgeben, die anhand der Route und der aktuellen Position der Navigationseinheit generiert werden.

Sowohl eine Routenberechnung als auch eine Zielführung werden im Folgenden jeweils als Navigationsvorgang bezeichnet.

Unter einer Antriebseinrichtung ist im weitesten Sinne eine konstruktive Einrichtung zu verstehen, welche durch Umformen von Energie, zum Beispiel elektrischer Energie in mechanische Energie, eine bewegbare Vorrichtung, zum Beispiel ein Fahrzeug, in Bewegung versetzen kann.

Die Antriebseinrichtung, die zur Bewegung eines Fahrzeugs eingerichtet ist, kann eine oder mehrere Antriebseinheiten aufweisen. Beispielsweise kann eine Antriebseinrichtung lediglich einen Elektromotor oder lediglich einen Verbrennungsmotor aufweisen. Es ist aber auch möglich, dass eine Antriebseinrichtung als Hybridantriebseinrichtung ausgeführt ist und daher zwei Antriebseinheiten aufweist, zum Beispiel eine erste Antriebseinheit mit einem Elektromotor und eine zweite Antriebseinheit mit einem Verbrennungsmotor. Die Energie, die einer der Antriebseinheiten zugeführt und in dieser umgewandelt wird, kann in einer Energiespeichereinheit gespeichert sein. Die Energiespeichereinheit kann einen Kraftstofftank, eine Batterie oder einen Akkumulator aufweisen.

Der Nutzer erwartet, dass unabhängig von der verwendeten Technologie die Antriebseinheit das Fahrzeug effizient bewegt. Mit anderen Worten soll eine möglichst große Reichweite oder eine möglichst kostengünstige Fortbewegung erzielt werden. Im Hinblick auf Elektrofahrzeuge und Hybridelektrofahrzeuge bedeutet dies, dass die Energiespeichereinheit, die dem Elektromotor elektrische Energie zuführt, wirtschaftlich, effizient und ressourcenschonend betrieben werden soll.

Die Verwendung eines Elektroantriebs oder eines Hybridelektroantriebs in Verbindung mit einem Akkumulator, welcher elektrische Energie für die Umwandlung in der Antriebseinheit vorhält, ist gegenwärtig durch viele Einschränkungen limitiert. So gibt es Probleme mit der Speicherkapazität bzw. dem Energiegehalt der Akkumulatoren und daraus resultierend Probleme mit der Reichweite elektrisch angetriebener Fahrzeuge. Weiterhin gibt es Probleme, die in der Energiespeichereinheit zur Verfügung stehende elektrische Energie optimal einzusetzen.

Herkömmliche Hybridelektroantriebseinheiten sind häufig derart ausgebildet, dass der Elektromotor und der Verbrennungsmotor vor allem parallel betrieben werden, wobei der Verbrennungsmotor in einem Niedriglastbereich oder im Leerlauf abgeschaltet sein kann. Vorteile des Systems bestehen darin, dass der Verbrennungsmotor überwiegend in einem günstigen Wirkungsgradbereich betrieben werden kann, während der Elektromotor als Unterstützung für den Verbrennungsmotor zusätzliches Drehmoment zur Verfügung stellen kann oder das Fahrzeug alleine bewegen kann. Ferner kann der Elektromotor mittels Rekuperation Bewegungsenergie des Fahrzeugs in die Energiespeichereinheit zurückspeisen.
US 5892346 A beschreibt eine Navigationseinrichtung eines Hybridfahrzeugs mit einem elektrischen Antrieb, die einen Verbrauch elektrischer Energie in Abhängigkeit einer zurückzulegenden Entfernung derart plant, dass beim Erreichen eines Zielorts keine elektrische Energie in einer den elektrischen Antrieb versorgenden Batterie verbleibt.
US 2008262668 A1 offenbart eine Navigationseinrichtung eines Hybridfahrzeugs mit einem elektrischen Antrieb, die eingerichtet ist, einen Anfangspunkt festzulegen, an dem von einer ersten Betriebsform zu einer zweiten Betriebsform umgeschaltet wird, so dass das Fahrzeug bis zu einem Zielort in der zweiten Betriebsform betrieben wird.
DE 102012011605 A1 beschreibt einen elektronischen Terminplaner, bei dem unter Berücksichtigung von Zeitdaten, geografischen Positionen, einer verfügbaren Restenergiemenge und eines Energieverbrauchs eines Fahrzeugs ein Routenplan und ein Energieauffüllplan erzeugt werden.
US 2009114463 A1 offenbart ein System für ein Hybridfahrzeug, mit dem ein von einem Energiespeicher versorgter elektrischer Antrieb optimal genutzt wird, so dass eine elektrische Ladestation erreicht wird, wobei das Fahrzeug beim Erreichen der Ladestation einen minimalen Ladezustand aufweist.

Herkömmliche elektrische Antriebseinheiten weisen das Problem auf, dass die elektrische Energie nicht effizient eingesetzt wird. Bei Betriebsstrategien gemäß dem Stand der Technik wird die elektrische Antriebseinheit lediglich dann als alleinige Antriebsquelle verwendet, wenn ansonsten der Verbrennungsmotor mit schlechten Teillast-Wirkungsgraden arbeiten würde.

Die Aufgabe der Erfindung besteht folglich darin, die vorgenannten Probleme zu lösen und ein energieeffizientes Verfahren zum Betreiben einer Antriebseinrichtung unter Verwendung einer Steuerungseinrichtung bereitzustellen.

Diese Aufgabe wird mit dem erfindungsgemäßen Verfahren zum Betreiben einer Antriebseinrichtung eines Fahrzeugs unter Verwendung einer Steuerungseinrichtung gemäß Anspruch 1 gelöst.

Das erfindungsgemäße Verfahren weist die folgenden Schritte auf: Ermitteln eines Zielorts, zu welchem das Fahrzeug voraussichtlich bewegt wird; Ermitteln, ob am Zielort eine Ladestation für das Fahrzeug voraussichtlich verfügbar sein wird, und, wenn am Zielort eine Ladestation für das Fahrzeug voraussichtlich verfügbar sein wird; Bestimmen einer maximalen Energiemenge, die an der Ladestation in die Energiespeichereinheit übertragen werden kann; und Steuern eines Ladezustands der Energiespeichereinheit, so dass die maximale Energiemenge an der Ladestation von der Energiespeichereinheit aufgenommen werden kann.

Das erfindungsgemäße Verfahren schafft die Voraussetzungen, das Fahrzeug energieeffizient zu betreiben. Durch das Ermitteln des Zielorts und der dortigen Verfügbarkeit einer Ladestation lässt sich eine in nächster Zeit von dem Fahrzeug erreichbare Lademöglichkeit identifizieren. Ferner ermöglichen das Bestimmen der maximal übertragbaren Energiemenge und das darauf basierende Steuern des Ladezustands der Energiespeichereinheit, die Energiespeichereinheit bei einem späteren Ladevorgang optimal, d.h. mit der größtmöglichen Energiemenge, zu befüllen.

Die beschriebene Vorgehensweise führt zu zwei Effekten. Erstens lässt sich das Fahrzeug, zum Beispiel ein Hybridelektrofahrzeug, auf dem Weg zu der Lademöglichkeit derart betreiben, dass der Anteil seines elektrischen Antriebs gegenüber seinem Verbrennungsmotorantrieb besonders hoch ist. Beispielsweise kann der elektrische Antrieb als alleiniger Antrieb verwendet werden, wenn die Lademöglichkeit ausreicht, die Energiespeichereinheit vollständig aufzuladen. Das führt zu einer Verbesserung der Energieeffizienz des Fahrzeugs, da der elektrische Antrieb einen besonders hohen Wirkungsgrad aufweist.

Zweitens ermöglicht das Übertragen der größtmöglichen Energiemenge in die Energiespeichereinheit, dass auch nach dem Ladevorgang der elektrische Antrieb bevorzugt eingesetzt werden kann, da die Energiespeichereinheit ausreichend geladen ist. Auch dies trägt zu einer Verbesserung der Energieeffizienz des Fahrzeugs bei.

Die oben genannte Aufgabe wird außerdem mit einer Steuerungseinrichtung zum Steuern des Ladezustands einer Energiespeichereinheit eines Fahrzeugs gemäß Anspruch 10 gelöst, welche die folgenden Bestandteile aufweist: eine Recheneinheit, die zum Ermitteln eines Zielorts, zu welchem das Fahrzeug voraussichtlich bewegt wird, Ermitteln, ob am Zielort eine für das Fahrzeug geeignete Ladestation voraussichtlich verfügbar sein wird und, wenn am Zielort eine für das Fahrzeug geeignete Ladestation voraussichtlich verfügbar sein wird, Bestimmen der maximalen Energiemenge, die an der Ladestation in die Energiespeichereinheit übertragen werden kann, eingerichtet ist; und eine Steuereinheit, die zum
Steuern eines Ladezustands der Energiespeichereinheit, so dass die maximale Energiemenge an der Ladestation von der Energiespeichereinheit aufgenommen werden kann, eingerichtet ist.

Weitere Ausführungsformen der Erfindung sind in den abhängigen Patentansprüchen beschrieben.

Die Erfindung wird nun Bezug nehmend auf die folgenden Figuren näher erläutert.
Die Figuren 1 und 2 zeigen jeweils ein Blockschema einer Steuerungseinrichtung gemäß einer Ausführungsform der Erfindung.
Figur 3 zeigt ein Ablaufschema einer Ausführungsform des erfindungsgemäßen Verfahrens.
Figur 4 zeigt schematisch eine Landkarte mit einer Route, entlang welcher ein Fahrzeug bewegt wird.

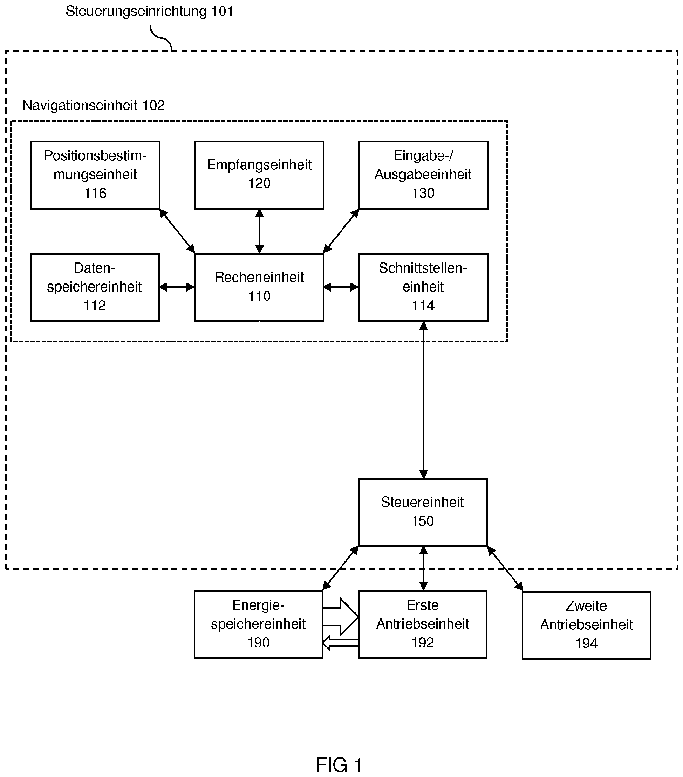

Im Folgenden wird auf Figur 1 Bezug genommen, die ein Blockschema einer Steuerungseinrichtung 101 gemäß einer Ausführungsform der Erfindung zeigt. Die schmalen Pfeile in der Figur symbolisieren das Übertragen von Informationen oder Signalen, während die Blockpfeile das Übertragen von Energie repräsentieren. Die Steuerungseinrichtung 101 ist in einem Hybridelektrofahrzeug (nicht gezeigt), nachfolgend kurz als Fahrzeug bezeichnet, fest eingebaut.

Die Steuerungseinrichtung 101 weist die folgenden Funktionsmodule auf: eine Navigationseinheit 102 mit einer Recheneinheit 110, einer Datenspeichereinheit 112, einer Schnittstelleneinheit 114, einer Positionsbestimmungseinheit 116, einer Empfangseinheit 120 und einer Eingabe- und Ausgabeeinheit 130; und eine Steuereinheit 150.

Die Navigationseinheit 102 ist fest mit dem Fahrzeug verbunden, beispielsweise in das Fahrzeug eingebaut. Alternativ dazu kann die Navigationseinheit lose mit dem Fahrzeug verbunden sein, sodass die Navigationseinheit leicht aus dem Fahrzeug entnehmbar ist.

Die Recheneinheit 110 weist einen Prozessor oder mehrere Prozessoren auf, die jeweils einen Prozessorkern oder mehrere Prozessorkerne enthalten, und ist dazu eingerichtet, Befehle und/oder Daten zu verarbeiten. Die Recheneinheit 110 kann den Ablauf des erfindungsgemäßen Verfahrens steuern und verschiedene Berechnungs- und Auswerteaufgaben erledigen, die noch erläutert werden. Die Recheneinheit 110 ist mit der Datenspeichereinheit 112, der Schnittstelleneinheit 114, der Positionsbestimmungseinheit 116, der Empfangseinheit 120 und der Eingabe- und Ausgabeeinheit 130 über Datenverbindungen gekoppelt. Die Recheneinheit 110 ist außerdem über die Schnittstelleneinheit 114 mit der Steuereinheit 150 gekoppelt. Die Recheneinheit 110 kann ferner mit weiteren Funktionsmodulen (nicht gezeigt) gekoppelt sein, zum Beispiel über eine Busverbindung.

Die Datenspeichereinheit 112 kann eine oder mehrere nichtflüchtige Speicher aufweisen, zum Beispiel Festplatten, Festwertspeicher (ROMs, Read-Only-Memories) oder Flash-Speicher. Alternativ dazu kann die Datenspeichereinheit 112 einen oder mehrere flüchtige Speicher aufweisen, zum Beispiel Arbeitsspeicher (RAMs, Random Access Memories) oder Caches. Die Datenspeichereinheit 112 kann ferner einen oder mehrere Speicher aufweisen, welche jeweils eine Mischform aus einem nichtflüchtigen Speicher und einem flüchtigen Speicher darstellen, zum Beispiel Hybridfestplatten. In der Datenspeichereinheit 112 abgelegte Daten können mit einem Zeitstempel versehen sein, um mit weiteren Daten hinsichtlich ihrer Aktualität vergleichbar zu sein.

Die Schnittstelleneinheit 114 ist dazu eingerichtet, zwischen der Recheneinheit 110 und externen, außerhalb der Navigationseinheit 102 angeordneten Funktionsmodulen, zum Beispiel der Steuereinheit 150, Daten auszutauschen.

Die Positionsbestimmungseinheit 116 kann Positionskoordinaten, welche eine geografische Position der Navigationseinheit 102 repräsentieren, durch Auswerten der Signale eines Satellitennavigationssystems, die mittels der Positionsbestimmungseinheit 116 empfangen werden, zum Beispiel mittels einer Satellitenantenne (nicht gezeigt), gewinnen und an die Recheneinheit 110 übermitteln.

Die Empfangseinheit 120 kann Übertragungssignale, mit denen Daten übertragen werden, nach außerhalb des Fahrzeugs senden und von außerhalb des Fahrzeugs empfangen. Die Daten bzw. Übertragungssignale können via physische Leitungen und/oder Schnittstelleneinheiten ("kabelgebunden") übermittelt werden, zum Beispiel über eine Busverbindung. Alternativ dazu können die Übertragungssignale bzw. Daten unter Verwendung elektromagnetischer Wellen ("drahtlos") übertragen werden. Ferner können die Übertragungssignale bzw. Daten über ein Peer-to-Peer-Netz oder über eine Client-Server-Struktur übertragen werden.

Die Eingabe- und Ausgabeeinheit 130 stellt die Schnittstelle zwischen dem Nutzer und der Navigationseinheit 102 dar. Der Nutzer kann Eingaben mittels Sprache oder mittels Bedienvorrichtungen, wie Tasten und/oder eine berührungsempfindliche Anzeige, vornehmen. Ausgaben können über akustische Signale, über eine Anzeige oder mittels Projektion erfolgen. Die Eingabe- und Ausgabeeinheit 130 kann einen Berührungsbildschirm (engl. touch screen) für die Eingabe und die Ausgabe von Daten aufweisen. In einer alternativen Ausführungsform kann die Eingabe- und Ausgabeeinheit 130 für die Eingabe von Daten und die Ausgabe von Daten separate Komponenten verwenden.

Die Steuereinheit 150 ist mit einer Energiespeichereinheit 190, einer ersten Antriebseinheit 192 und einer zweiten Antriebseinheit 194 gekoppelt. Die Steuereinheit 150 kann die in der Energiespeichereinheit 190 gespeicherte Energie bestimmen. Die Steuereinheit 150 kann zudem das Laden und das Entladen der Energiespeichereinheit 190 steuern, zum Beispiel das Ladeverfahren und das Einhalten einer Ladeschlussspannung/Entladeschlussspannung beim Laden bzw. Entladen der Energiespeichereinheit 190. Ferner kann die Steuereinheit 150 die Umgebungsbedingungen der Energiespeichereinheit 190 überwachen und durch Veranlassen von Kühlen oder Beheizen der Energiespeichereinheit 190 eine geeignete Betriebstemperatur für die Energiespeichereinheit 190 sicherstellen, um die Leistungsfähigkeit und die Lebensdauer der Energiespeichereinheit 190 zu optimieren.

Weiterhin kann die Steuereinheit 150 die erste Antriebseinheit 192 dahingehend regeln, dass Leistungskennwerte der ersten Antriebseinheit 192 an die in der Energiespeichereinheit 190 verfügbare Menge gespeicherter Energie angepasst werden. Mit anderen Worten kann die Steuereinheit 150 den Verbrauch an elektrischer Energie reduzieren, zum Beispiel durch Begrenzen einer Leistung eines Elektromotors in der ersten Antriebseinheit 192, wenn sich die in der Energiespeichereinheit 190 gespeicherte Energie der Entladeschlussspannung annähert. Das Annähern an die Entladeschlussspannung kann durch Überschreiten eines bestimmten Schwellenwertes festgestellt werden.

Die Energiespeichereinheit 190 ist ein Funktionsmodul, in dem innerhalb des Fahrzeugs Energie zum Betrieb des Fahrzeugs gespeichert wird. Die Energiespeichereinheit 190 kann in/an dem Fahrzeug fest angebracht sein oder aus/von dem Fahrzeug entnehmbar sein.

Die Energiespeichereinheit 190 kann dafür ausgelegt sein, Energie in mehr als einer Energieform zu speichern, zum Beispiel in Form von elektrischer Energie, chemischer Energie und/oder thermischer Energie. Die in der Energiespeichereinheit 190 gespeicherte Energie kann an die erste Antriebseinheit 192 und an weitere Verbraucher (nicht gezeigt) abgegeben werden, zum Beispiel an eine Heizvorrichtung oder an eine Audiovorrichtung.

Bei der ersten Antriebseinheit 192 handelt es sich um einen Elektromotor. Die erste Antriebseinheit 192 ist dazu eingerichtet, das Fahrzeug (nicht gezeigt) zu bewegen. Dazu wandelt die erste Antriebseinheit 192 aus der Energiespeichereinheit 190 zugeführte elektrische Energie in kinetische Energie um. Die kinetische Energie kann auf Einrichtungen wirken, zum Beispiel auf Räder, Schrauben oder Propeller, die eine Bewegung des Fahrzeugs ermöglichen.

Alternativ dazu kann es sich bei der ersten Antriebseinheit um eine andere Art von Motor handeln, zum Beispiel um einen Verbrennungsmotor, einen Stirlingmotor, einen Hydraulikmotor oder eine Gasturbine. Außerdem kann die der ersten Antriebseinheit zugeführte Energie auch in chemischer oder thermischer Form vorliegen.

Der Elektromotor der ersten Antriebseinheit 192 wird mit elektrischer Energie betrieben, die in der Energiespeichereinheit 190 gespeichert ist und dem Elektromotor zugeführt wird. Der elektrische Antrieb weist im Vergleich zu anderen Antriebsarten, wie einem Verbrennungsmotorantrieb, einen deutlich höheren Wirkungsgrad auf. Ferner weist der Elektromotor gegenüber einem Verbrennungsmotor niedrigere Betriebskosten auf. Aus diesem Grund ist ein Nutzer eines Hybridelektrofahrzeugs, welches einen Elektromotor und zum Beispiel einen Verbrennungsmotor aufweist, bestrebt, eine möglichst große Wegstrecke zum Beispiel eine Wegstrecke von einer aktuellen Position zu einem Zielort, mit Hilfe des Elektromotors zurückzulegen und den Verbrennungsmotor so wenig wie möglich einzusetzen.

Zusätzlich zu der ersten Antriebseinheit 192 weist das Fahrzeug noch eine zweite Antriebseinheit 194 auf, bei der es sich um einen Verbrennungsmotor handelt. Alternativ dazu kann es sich bei der zweiten Antriebseinheit um eine andere Art von Motor handeln, wie eine Dampfmaschine, eine Gasturbine, einen Hydraulikmotor, einen Druckluftmotor oder einen Stirlingmotor.

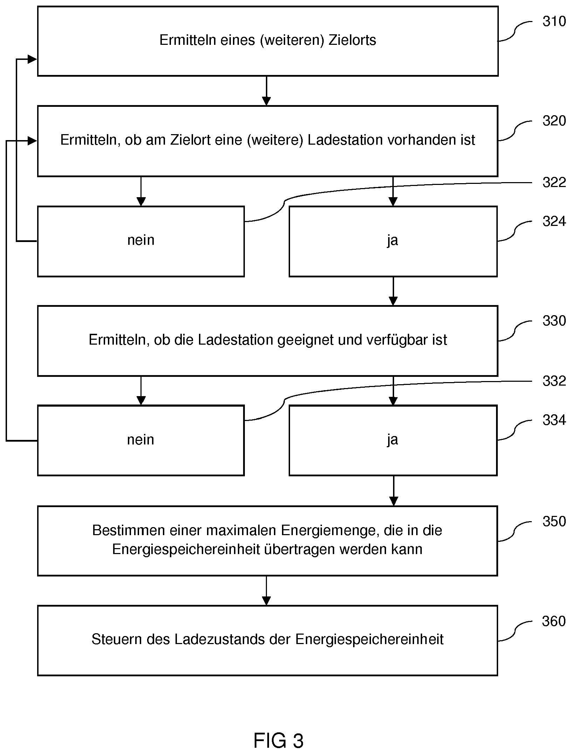

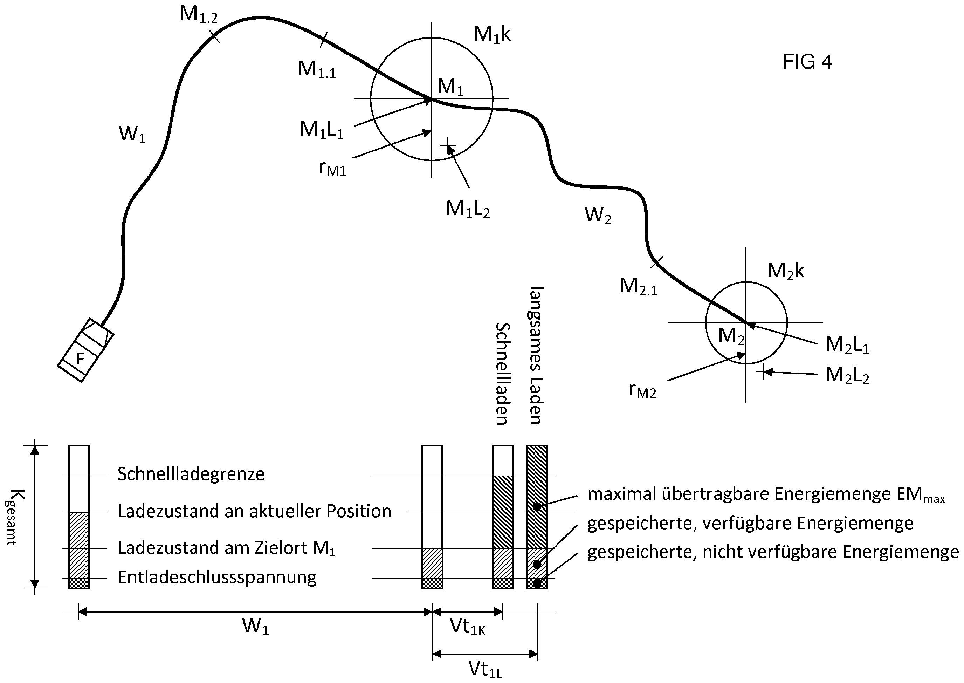

Im Folgenden wird eine beispielhafte Ausführungsform des erfindungsgemäßen Verfahrens unter zusätzlicher Bezugnahme auf die Figuren 3 und 4 beschrieben.

Bei einem ersten Verfahrensschritt 310 wird ein Zielort M₁ ermittelt, zu welchem das Fahrzeug voraussichtlich bewegt wird.

Unter dem Zielort M₁ ist eine geografische Position zu verstehen, an der das Fahrzeug voraussichtlich solange abgestellt bzw. geparkt sein wird, dass die Energiespeichereinheit 190 aufgeladen werden könnte, wenn eine geeignete Lademöglichkeit vorhanden wäre. Beispielsweise gibt der Zielort M₁ eine Lokalität an, an welcher der Nutzer das Fahrzeug typischerweise verlässt. Dabei kann es sich um die Wohnung oder die Arbeitsstelle des Nutzers handeln, d.h. um einen Zielort am Ende einer Route. Der Zielort M₁ kann auch ein Zwischenhalt auf einer Route sein, zum Beispiel ein Halt an einem Einkaufszentrum auf dem Weg nach Hause. Der Zielort M₁ kann demnach dadurch bestimmt sein, dass der Zündschlüssel des Fahrzeugs abgezogen wird. Der Zielort M₁ wird demnach normalerweise nicht an einer Ampelkreuzung oder an einem Bahnübergang angeordnet sein.

Bei einer anderen Ausführungsform der Erfindung ist der Zielort dadurch gekennzeichnet, dass das Fahrzeug an dem Zielort voraussichtlich eine vorgegebene Zeit oder länger als eine vorgegebene Zeit abgestellt sein wird.

Der Zielort M₁ ist durch eine Verweildauer Vt₁ charakterisiert. Die Verweildauer Vt₁ ist die Zeit, die das Fahrzeug voraussichtlich am Zielort M₁ abgestellt bzw. geparkt sein wird. Mit anderen Worten gibt die Verweildauer Vt₁ die ungefähre Dauer eines Zeitintervalls an, in welchem das Fahrzeug am Zielort M₁ aufgeladen werden könnte. Die Verweildauer Vt₁ wird aus historischen Daten ermittelt, die in der Datenspeichereinheit 112 derart hinterlegt sind, dass die Daten mit dem Zielort M₁ verknüpft sind. Beispielweise ist in der Datenspeichereinheit 112 hinterlegt, dass der Nutzer das Fahrzeug regelmäßig montags um ca. 19 Uhr auf einen zu einem Einkaufszentrum gehörigen Parkplatz für etwa 60 min abstellt.

Die Recheneinheit 110 ermittelt den Zielort M₁ unter Zuhilfenahme der Positionsbestimmungseinheit 116, ohne dass ein Nutzer ein Ziel eingibt.

Alternativ dazu kann der Zielort M₁ aus einem Ziel ermittelt werden, dass ein Nutzer über die Eingabe- und Ausgabeeinheit 130 in die Navigationseinheit 102 eingegeben hat. Würde durch den Nutzer ein bisher unbekanntes Ziel eingegeben, würde die Recheneinheit 110 prüfen, ob bekannte Zielorte mit bekannter Verweildauer entlang einer Route, die zu dem Ziel führt, vorlägen. Wenn das zuträfe, würde die Recheneinheit 110 eine mit einem bekannten Zielort an der Route verknüpfte Verweildauer ermitteln.

Bei einer anderen Ausführungsform der Erfindung kann der Nutzer eine Verweildauer für einen Zielort manuell eingeben.

Sobald ein Zielort M₁ ermittelt ist, bestimmt die Recheneinheit 110 eine Wegstrecke W₁ von der aktuellen Position des Fahrzeugs zum Zielort M₁.

Bei einem zweiten Verfahrensschritt, welcher von den Teilschritten 320 bis 334 repräsentiert wird, ermittelt die Recheneinheit 110, ob am Zielort M₁ eine für das Fahrzeug geeignete Ladestation verfügbar ist. Dazu prüft die Recheneinheit 110 zunächst in der Datenspeichereinheit 112 gespeicherte historische Daten bezüglich am Zielort M₁ vorhandener Ladestationen. Die Daten können in Form einer Datenbank vorliegen. Zusätzlich oder alternativ kann unter Verwendung der Empfangseinheit 120 online mittels Fernabfrage auf weitere Daten zu am Zielort M₁ vorhandenen Ladestationen zurückgegriffen werden.

Die Prüfung wird für ein bestimmtes Umfeld des Zielorts M₁ durchgeführt. Dazu ist in der Datenspeichereinheit 112 ein Radius r_{M} vorgegeben, der einen Umkreis M₁k um den Zielort M₁ als Kreismittelpunkt definiert, innerhalb dessen die Recheneinheit 110 das Vorhandensein einer Ladestation prüft.

In einer weiteren Ausführungsform der Erfindung kann der Radius r_{M} manuell eingestellt werden.

Wenn am Zielort M₁ bzw. im Umkreis M₁k keine Ladestation ermittelt werden konnte, wird die Suche, wie in Teilschritt 322 gezeigt, mit dem Ermitteln eines weiteren Zielorts fortgesetzt.

Dann beginnt das Verfahren erneut mit dem Ermitteln eines Zielorts, wobei zum Beispiel ein Zielort M_{1.1} ermittelt wird. Der Zielort M_{1.1} steht vorzugsweise in einem Verhältnis zum Zielort M₁, zum Beispiel indem der Zielort M_{1.1} auf der Wegstrecke W₁ liegt, die von der aktuellen Position des Fahrzeugs zu dem Zielort M₁ führt. Anschließend prüft die Recheneinheit 110, wie zuvor erläutert, ob am Zielort M_{1.1} eine Ladestation vorhanden ist.

Bei einer anderen Ausführungsform der Erfindung wird, wenn keine Ladestation innerhalb eines vorgegebenen Umkreises um den Zielort angeordnet ist, geprüft, ob eine Ladestation innerhalb eines vorgegebenen größeren Umkreises um den Zielort angeordnet ist. Erst, wenn auch in dem größeren Umkreis keine Ladestation ermittelt werden kann, wird ein weiterer Zielort ermittelt.

Ergibt die Prüfung dagegen, wie in Teilschritt 324 gezeigt, dass am Zielort M₁ eine Ladestation M₁L₁ vorhanden ist, wird ermittelt, ob die gefundene Ladestation M₁L₁ für das Fahrzeug geeignet ist und voraussichtlich verfügbar sein wird, wenn das Fahrzeug den Zielort M₁ erreicht, wie Teilschritt 330 zeigt. Beim Ermitteln der Eignung und der Verfügbarkeit der am Zielort M₁ vorhandenen Ladestation M₁L₁ wird die Ladestation M₁L₁ dahingehend analysiert, ob die Ladestation M₁L₁ mit dem Fahrzeug kompatibel, betriebsbereit und frei ist. Unter "kompatibel" ist die Eignung der Ladestation M₁L₁ zu verstehen, Energie von der Ladestation M₁L₁ in die Energiespeichereinheit 190 zu übertragen. Das setzt unter anderem eine mechanische Kompatibilität zwischen einem Ladestecker der Ladestation M₁L₁ und einer Ladebuchse des Fahrzeugs voraus. "Betriebsbereit" bedeutet unter anderem, dass die Ladestation M₁L₁ nicht defekt ist bzw. in der Lage ist, dem Fahrzeug Energie zuzuführen. "Frei" betrifft allgemein die Erreichbarkeit und Zugänglichkeit der Ladestation M₁L₁, d.h. der Nutzer kann die Ladestation M₁L₁ mit seinem Fahrzeug erreichen und die Ladestation M₁L₁ ist nicht durch ein anderes Fahrzeug belegt. Dazu greift die Recheneinheit 110 wie zuvor erläutert auf in der Datenspeichereinheit 112 gespeicherte Daten zurück und/oder führt eine Fernabfrage durch.

Bei einer anderen Ausführungsform der Erfindung kann die Recheneinheit 110 die Ladestation M₁L₁ für das Fahrzeug des Nutzers reservieren, zum Beispiel ab einer voraussichtlichen Ankunftszeit des Fahrzeugs am Zielort M₁.

Wenn festgestellt wird, dass eine am Zielort M₁ vorhandene Ladestation nicht für das Fahrzeug geeignet oder nicht verfügbar ist, wird die Suche, wie in Teilschritt 332 gezeigt, mit dem Ermitteln einer weiteren Ladestation am Zielort M₁ fortgesetzt.

Wenn dagegen, wie in Teilschritt 334 gezeigt, am Zielort M₁ eine für das Fahrzeug geeignete und verfügbare Ladestation M₁L₁ ermittelt werden konnte, wie im vorliegenden Fall, wird bei einem dritten Verfahrensschritt 350 eine maximale Energiemenge EMₘₐₓ bestimmt, die an der Ladestation M₁L₁ in die Energiespeichereinheit 190 übertragen werden kann.

Dazu ermittelt die Recheneinheit 110, welche Ladeleistung die Ladestation M₁L₁ aufweist, zum Beispiel durch Prüfen analoger historischer Daten, die in der Datenspeichereinheit 112 gespeichert sind, oder mittels Fernabfrage.

Zudem ermittelt die Recheneinheit 110 unter Zuhilfenahme der Steuereinheit 150 den aktuellen Ladezustand der Energiespeichereinheit 190 und deren Gesamtkapazität K_{gesamt}.

Der aktuelle Ladezustand der Energiespeichereinheit 190 gibt an, welche Energiemenge die Energiespeichereinheit 190 des Fahrzeugs an der aktuellen Position aufweist. Diese Energiemenge weist eine verfügbare Energiemenge und eine nicht verfügbare Energiemenge auf. Die nicht verfügbare Energiemenge schützt die Energiespeichereinheit 190 vor Tiefentladung und damit vor Schädigung. Die nicht verfügbare Energiemenge weist einen konstanten Wert auf.

Die Gesamtkapazität K_{gesamt} gibt an, welche Energiemenge die Energiespeichereinheit 190 maximal aufnehmen und speichern kann.

Außerdem bestimmt die Recheneinheit 110 eine Energiemenge, welche entlang der Wegstrecke W₁ aus der Energiespeichereinheit 190 entnehmbar ist. Dabei handelt es sich um eine Energiemenge, welche aus der Energiespeichereinheit 190 entnommen würde, wenn das Fahrzeug entlang der Wegstrecke W₁ vom Elektromotor der ersten Antriebseinheit 192 allein angetrieben würde, soweit dies möglich ist, ohne eine Ladezustandsuntergrenze der Energiespeichereinheit 190 zu unterschreiten.

Aus der ermittelten Ladeleistung der Ladestation M_{1L1}, der bekannten Verweildauer Vt₁ an der Ladestation M₁L₁, dem aktuellen Ladezustand der Energiespeichereinheit 190, der entlang der Wegstrecke W₁ aus der Energiespeichereinheit 190 entnehmbaren Energiemenge und der Gesamtkapazität K_{gesamt} der Energiespeichereinheit 190 bestimmt die Recheneinheit 110 die maximale Energiemenge EMₘₐₓ, die an der Ladestation M₁L₁ in die Energiespeichereinheit 190 übertragen werden kann.

Dazu wird aus der Ladeleistung der Ladestation M₁L₁ und der Verweildauer Vt₁ eine von der Ladestation M₁L₁ während der Verweildauer Vt₁ lieferbare Energiemenge bestimmt. Außerdem wird eine von der Energiespeichereinheit 190 am Zielort M₁ aufnehmbare Energiemenge als Summe der Gesamtkapazität K_{gesamt} und der entnehmbaren Energiemenge, abzüglich einer Energiemenge, die dem aktuellen Ladezustand entspricht, berechnet. Ist die lieferbare Energiemenge kleiner als die aufnehmbare Energiemenge, entspricht die gesuchte maximale Energiemenge EMₘₐₓ der lieferbaren Energiemenge. Ist dagegen die aufnehmbare Energiemenge kleiner als die lieferbare Energiemenge, entspricht die gesuchte maximale Energiemenge EMₘₐₓ der aufnehmbaren Energiemenge.

Bei einem vierten Verfahrensschritt 360 wird der Ladezustand der Energiespeichereinheit 190 so gesteuert, dass die maximale Energiemenge EMₘₐₓ an der Ladestation M₁L₁ tatsächlich von der Energiespeichereinheit 190 aufgenommen werden kann.

Ziel der Steuerung des Ladezustands der Energiespeichereinheit 190 ist, die Verweildauer Vt₁ am Zielort M₁ zu nutzen, um die Energiespeichereinheit 190 möglichst vollständig aufzuladen. Unter vollständigem Aufladen wird aus Gründen der Langlebigkeit der Energiespeichereinheit 190 ein Wert von etwa 80 % der Gesamtkapazität der Energiespeichereinheit 190 bei relativ kurzer Verweildauer, zum Beispiel bei einem einstündigen Halt an einen Einkaufszentrum, und ein Wert von mehr als 80 % bei relativ langer Verweildauer, zum Beispiel neun Stunden beim Abstellen des Fahrzeugs über Nacht zu Hause, verstanden. Eine vollständig geladene Energiespeichereinheit 190 ermöglicht, die elektrische erste Antriebseinheit 192 besonders häufig zuzuschalten oder, ab einem gewissen Punkt einer Wegstrecke zu einem Zielort, zum Beispiel ab einem Ort M_{1.2} der Wegstrecke W₁ zum Zielort M₁, als ausschließliche Antriebsquelle zu verwenden.

Um die Energiespeichereinheit 190 vollständig aufzuladen, wird angestrebt, die am Zielort M₁ während der Verweildauer Vt₁ maximal übertragbare Energiemenge EMₘₐₓ vollständig in der Energiespeichereinheit 190 speichern zu können. Dazu ist beim Befahren der Wegstrecke W₁ aus der Energiespeichereinheit 190 eine bestimmte Energiemenge an die erste Antriebseinheit 192 freizugeben.

Hierfür bestimmt die Recheneinheit 110 eine theoretisch freie Kapazität K der Energiespeichereinheit 190 als Differenz der Gesamtkapazität K_{gesamt} der Energiespeichereinheit 190 und einer theoretischen Energierestmenge am Zielort M₁. Die Energierestmenge resultiert aus der dem aktuellen Ladezustand der Energiespeichereinheit 190 entsprechenden Energiemenge abzüglich eines theoretischen Energiebedarfs EB₁ entlang der Wegstrecke W₁, wenn das Fahrzeug normal, das heißt ohne zusätzliche Beeinflussung des Verhältnisses beider Antriebsarten, betrieben würde.

Der Energiebedarf EB₁ repräsentiert die Menge elektrischer Energie, die das Fahrzeug bei einem normalen Betrieb entlang der Wegstrecke W₁ voraussichtlich benötigen bzw. konsumieren würde. Als elektrische Verbraucher werden neben der ersten Antriebseinheit 192 auch Audiovorrichtungen, Heizvorrichtungen, Beleuchtungseinrichtungen, usw. berücksichtigt.

Bei einer anderen Ausführungsform der Erfindung werden beim Ermitteln des Energiebedarfs EB₁ weitere Einflussgrößen berücksichtigt, zum Beispiel eine Beschaffenheit der Wegstrecke W₁, die zum Beispiel Wegstreckenverlängerungen wie Sperrungen, Umleitungen oder Kreuzungen und Ampeln aufweist, welche Energien beim Abbremsen und Beschleunigen erzeugen können bzw. benötigen. Die Informationen können durch die Navigationseinheit bereitgestellt werden.

In einer weiteren Ausführungsform der Erfindung werden Effekte wie die Tageszeit und/oder Jahreszeit und/oder das Wetter beim Ermitteln des Energiebedarfs EB₁ berücksichtigt, die zum Beispiel das Beheizen von Scheiben und Sitzen, das Einsetzen der Fahrzeugbeleuchtung, usw. erforderlich machen.

Daraufhin vergleicht die Recheneinheit 110 die freie Kapazität K mit der maximal übertragbaren Energiemenge EMₘₐₓ.

Ergibt der Vergleich, dass die freie Kapazität K größer ist als die maximal übertragbare Energiemenge EMₘₐₓ, d.h. eine von der Energiespeichereinheit 190 bei Normalbetrieb aufnehmbare Energiemenge EM ist größer als die Energiemenge EMₘₐₓ, die an der Ladestation M₁L₁ maximal in die Energiespeichereinheit 190 übertragen werden kann, wird das Fahrzeug normal weiterbetrieben. Das Fahrzeug wird mit anderen Worten ohne zusätzliche Beeinflussung des Verhältnisses beider Antriebsarten weiterbetrieben.

Ergibt der Vergleich dagegen, dass die freie Kapazität K kleiner oder gleich der maximal übertragbaren Energiemenge EMₘₐₓ ist, setzt die Steuereinheit 150 die elektrische erste Antriebseinheit 192 häufiger als im normalen Betrieb und die zweite Antriebseinheit 194 seltener als im normalen Betrieb ein, d.h. der elektrische Antrieb wird gegenüber dem konventionellen Antrieb bevorzugt. Die erste Antriebseinheit 192 wird zum Beispiel häufiger zugeschaltet. Die erste Antriebseinheit 192 kann zudem ab einem gewissen Punkt der Wegstrecke W₁, zum Beispiel ab einem Ort M_{1.2}, als ausschließliche Antriebsquelle verwendet werden.

Ab dem Ort M_{1.2} ist gewährleistet, dass die Energiespeichereinheit 190 bei ausschließlich elektrischem Antrieb an der Ladestation M₁L₁ wieder vollständig aufgeladen werden kann. Mit anderen Worten würde bei ausschließlich elektrischem Antrieb ab einem früheren Ort auf der Wegstrecke W₁ die Energiespeichereinheit 190 nicht vollständig aufgeladen werden können, da der Energiebedarf EB₁ die maximal übertragbare Energiemenge EMₘₐₓ übersteigen würde. Das Fahrzeug kann ab dem Ort M_{1.2} ausschließlich durch die erste Antriebseinheit 192 bewegt werden, wodurch der Nutzer die Vorteile des Elektromotors gegenüber dem Verbrennungsmotor nutzen kann.

Das Ermitteln der am Zielort M₁ vorliegenden Energierestmenge unterliegt einer gewissen Unsicherheit. Wird das Fahrzeug elektrisch durch die erste Antriebseinheit 192 bewegt und die Recheneinheit 110 stellt unter Zuhilfenahme der Steuereinheit 150 fest, dass ein tatsächlicher Energiebedarf EB₁ höher ist als der ermittelte theoretische Energiebedarf EB₁, zum Beispiel wenn eine Umleitung infolge einer erst nach Ermittlung des Energiebedarfs EB₁ ereigneten Straßensperre auftritt, kann die Steuereinheit 150 unter Verwendung der Recheneinheit 110 regelnd eingreifen. Die Steuereinheit 150 kann zum Beispiel Leistungskennwerte der ersten Antriebseinheit 192 ändern, um den Bedarf an elektrischer Energie zu reduzieren, wie Verringern der Beschleunigung, Verringern der Höchstgeschwindigkeit, usw. Ziel ist das Angleichen des tatsächlichen Energiebedarfs EB₁ an den ermittelten theoretischen Energiebedarf EB₁, so dass die Wegstrecke W₁ angetrieben durch die erste Antriebseinheit 192 zurückgelegt werden kann, ohne die zweite Antriebseinheit 194 aktivieren zu müssen.

Bei einer anderen Ausführungsform der Erfindung kann die Steuereinheit 150 zusätzlich weitere Verbraucher dahingehend steuern, dass diese einen geringeren Bedarf an elektrischer Energie aufweisen. Mögliche Maßnahmen können das Abschalten von Lautsprechern einer Audiovorrichtung, das Begrenzen der Heizleistung einer Heizvorrichtung, das Abschalten einer Sitzheizung und/oder das Abschalten einer Klimaanlage sein.

Das Ermitteln der maximal übertragbaren Energiemenge EMₘₐₓ und der freien Kapazität K hängt von der Qualität der in der Datenspeichereinheit 112 gespeicherten historischen Werte und den mittels Fernabfrage ermittelten Werten ab. Zur Verbesserung der Vorhersage vergleicht die Recheneinheit 110 die auf Basis der historischen Werte ermittelten Daten mit den tatsächlichen Daten. Dadurch werden die in der Datenspeichereinheit 112 gespeicherten Daten verifiziert oder gegebenenfalls korrigiert. Aus der Übereinstimmung zwischen den gespeicherten Daten und den tatsächlichen Daten kann die Qualität der Vorhersage, zum Beispiel mittels Fuzzylogik, verbessert werden.

Dies betrifft zum Beispiel die Daten zur Vorhersage eines Zielorts. Dazu wird die Route der zurückgelegten Wegstrecke W₁ zum Zielort M₁ auf Übereinstimmung mit in der Datenspeichereinheit 112 gespeicherten, mit dem Zielort M₁ verknüpften historischen Routen geprüft.

Weiterhin wird bei dem Verfahren die Position der Ladestation M₁L₁, an der das Fahrzeug aufgeladen wird, in Bezug auf eine Entfernung zum Zielort M₁, zu dem das Fahrzeug bewegt wurde, geprüft.

Bei dem Verfahren werden zudem die Eigenschaften der Ladestation M₁L₁, an der das Fahrzeug aufgeladen wird, geprüft. Die Eigenschaften der Ladestation M₁L₁ weisen technische Parameter wie zum Beispiel verwendeter Ladestecker, eine Ladeleistung oder eine Fähigkeit zur Schnellladung auf, aber auch eine Anzahl der Lademöglichkeiten an der Ladestation M₁L₁, eine Erreichbarkeit und Öffnungszeiten, ein jeweiliger Strompreis, akzeptierte Zahlungsverfahren, usw. werden berücksichtigt.

Bei dem Verfahren wird außerdem die tatsächliche Verweildauer Vt₁ am Zielort M₁ bzw. an einer am Zielort M₁ befindlichen Ladestation M₁L₁ festgehalten und diese mit entsprechenden Daten verglichen, die in der Datenspeichereinheit 112 gespeichert sind.

In einer Ausführungsform der Erfindung wird der Nutzer durch eine entsprechende Ausgabe über die Eingabe- und Ausgabeeinheit angewiesen, den Ladevorgang einzuleiten, zum Beispiel durch Anschließen des Fahrzeugs an eine Ladestation. Bei einer induktiven Ladestation weist das Verfahren den Nutzer über die Eingabe- und Ausgabeeinheit hin, dass ein Ladevorgang begonnen hat.

Die Erfindung stellt ein Verfahren bereit, gemäß dem ein Hybridelektrofahrzeug derart gesteuert wird, dass es einen möglichst großen Teil einer Wegstrecke W₁ elektrisch angetrieben durch die erste Antriebseinheit 192 zurücklegt. Dazu ermittelt die Recheneinheit 110 den voraussichtlichen Zielort M₁ und eine am Zielort M₁ voraussichtlich verfügbare Ladestation M₁L₁. Auf Grundlage der Eigenschaften der Ladestation M₁L₁ und bekannten historischen Daten zur Verweildauer Vt₁ am Zielort M₁ ermittelt die Recheneinheit 110 eine maximale Energiemenge EMₘₐₓ, die am Zielort M₁ in die Energiespeichereinheit 190 übertragen werden kann. Ausgehend von diesem Wert steuert die Steuereinheit 150 in Verbindung mit der Recheneinheit 110 das Fahrzeug derart, dass die erste Antriebseinheit 192 gegenüber der zweiten Antriebseinheit 194 unter Umständen bevorzugt eingesetzt wird. Dies kann gegenüber einem Normalbetrieb ein häufigeres Zuschalten des Elektromotors aufweisen oder das Zurücklegen eines möglichst großen Anteils der Wegstrecke W₁, angetrieben durch die erste Antriebseinheit 192. Der Einsatz der ersten Antriebseinheit 192 soll derart gesteuert werden, dass die an der Ladestation M₁L₁ maximal übertragbare Energiemenge EMₘₐₓ möglichst vollständig von der Energiespeichereinheit 190 aufgenommen werden kann.

Das zuvor erläuterte Verfahren wird erneut durchlaufen, wenn das Fahrzeug vom Zielort M₁ zu einem nächstfolgenden Zielort M₂ bewegt wird. Optional kann das Verfahren auch bereits vor dem Erreichen des Zielorts M₁ erneut durchlaufen werden.

In einer anderen Ausführungsform der Erfindung berücksichtigt die Recheneinheit nicht nur einen kommenden Zielort M₁, sondern auch einen nachfolgenden Zielort M₂, wobei M₁ zum Beispiel ein Halt an einem Einkaufszentrum auf einer Wegstrecke W₁+W₂ zum Wohnort und M₂ der Wohnort eines Nutzers ist. Die Recheneinheit kann beispielweise, wenn durch Fernabfrage bekannt ist, dass der Strompreis an einer Ladestation M₁L₁ höher ist als einer Ladestation M₂L₁, unter Verwendung einer Steuereinheit regeln, dass eine Energiespeichereinheit nicht vollständig, sondern nur bis zu einem Niveau aufgeladen wird, das gerade ausreicht, um M₂L₁ mit rein elektrischem Antrieb zu erreichen. Die Energiespeichereinheit 190 kann dann am Zielort M₂ zu wirtschaftlicheren Konditionen vollständig aufgeladen werden.

In einer weiteren Ausführungsform der Erfindung kann die Steuereinheit 150 unter Verwendung der Recheneinheit 110 die erste Antriebseinheit 192 dahingehend regeln, dass abhängig von einer bekannten Route der Elektromotor frühzeitig von einem Betrieb als Antriebsquelle in einen Generatorbetrieb umgeschaltet wird, zum Beispiel vor Kreuzungen oder Gefällestrecken. Auf diese Weise kann ein Bremsvorgang sanfter gestaltet werden und beim Bremsen entstehende elektrische Leistungsspitzen können verringert bzw. die beim Bremsen entstehende Energie kann zu einem größeren Teil in der Energiespeichereinheit 190 gespeichert werden. Die dazu notwendigen Landkartendaten sind in der Datenspeichereinheit 112 vorhanden.

In noch einer weiteren Ausführungsform der Erfindung kalkuliert die Recheneinheit die durch Rekuperation gewonnene Energiemenge bei der Ermittlung des Energiebedarfs EB₁ ein.

In noch einer weiteren Ausführungsform der Erfindung werden der Energiebedarf EB₁ und ein daraus resultierender Teil einer Wegstrecke W₁, welcher durch die erste Antriebseinheit 192 rein elektrisch angetrieben zurückgelegt wird, in Echtzeit ermittelt.

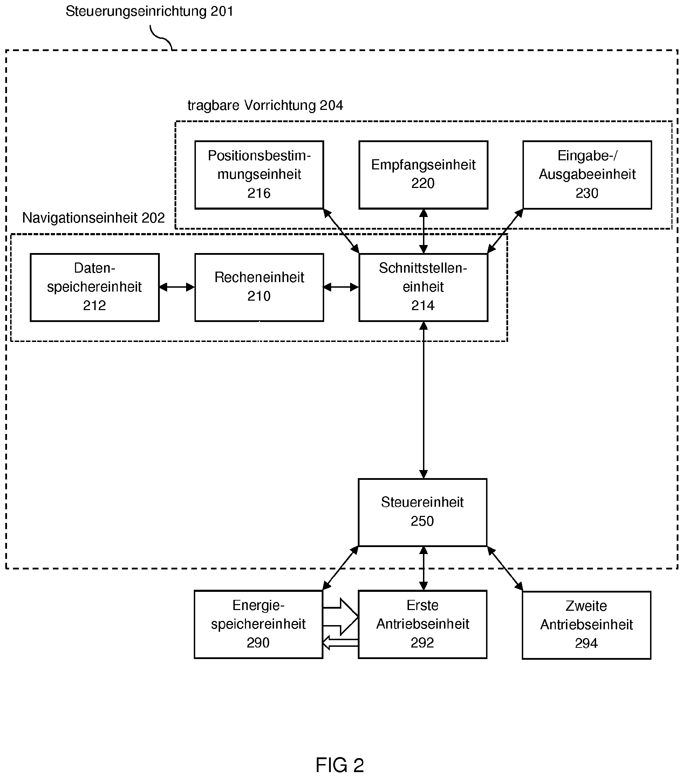

Eine alternative Ausführungsform der Erfindung ist in Figur 2 dargestellt, gemäß welcher eine Steuerungseinrichtung 201 die folgenden Funktionsmodule aufweist: eine Navigationseinheit 202 mit einer Recheneinheit 210, einer Datenspeichereinheit 212 und einer Schnittstelleneinheit 214; eine tragbare Vorrichtung 204 mit einer Positionsbestimmungseinheit 216; einer Empfangseinheit 220 und einer Eingabe- und Ausgabeeinheit 230; und eine Steuereinheit 250. Weiterhin zeigt Figur 2 eine Energiespeichereinheit 290, eine erste Antriebseinheit 292 und eine zweite Antriebseinheit 294. Die Funktionsmodule 216, 220, 230, 212, 210, 214, 250, 290, 292 und 294 entsprechen hinsichtlich ihrer Funktion den in Figur 1 gezeigten Funktionsmodulen 116, 120, 130, 112, 110, 114, 150, 190, 192 und 194. Die schmalen Pfeile in der Figur symbolisieren das Übertragen von Informationen oder Signalen, während die Blockpfeile das Übertragen von Energie repräsentieren.

Im Gegensatz zu der in Figur 1 gezeigten Steuerungseinrichtung 101 sind die Positionsbestimmungseinheit 216, die Empfangseinheit 220 und die Eingabe- und Ausgabeeinheit 230 nicht innerhalb der Navigationseinheit 202, sondern außerhalb der Navigationseinheit 202, scilicet in der tragbaren Vorrichtung 204, angeordnet. Bei der tragbaren Vorrichtung 204 kann es sich um ein Smartphone, einen Tablet-PC, einen tragbaren Computer oder eine vergleichbare Vorrichtung handeln. In diesem Fall können eine Eingabe und eine Ausgabe über entsprechende Einrichtungen der tragbaren Vorrichtung 204 erfolgen, wie auch das Senden und Empfangen von Daten und das Bestimmen der Positionskoordinaten darüber möglich ist. Die externen Funktionsmodule sind mit der Navigationseinheit 202, insbesondere der Recheneinheit 210, über die Schnittstelleneinheit 214 gekoppelt.

Die Figur 4 stellt schematisch eine Landkarte dar, welche die Bewegung eines Fahrzeugs F von einer aktuellen Position über eine Wegstrecke W₁ zu einem Zielort M₁ zeigt. Die Figur 4 stellt zudem schematisch verschiedene Ladezustände der Energiespeichereinheit 190 dar.

Die gezeigten Wegstrecken W₁ und W₂ sind beispielhaft gewählt. Um die Zielorte M₁ und M₂ verläuft jeweils ein Umkreis M₁k bzw. M₂k, welcher durch einen Radius r_{M1} bzw. r_{M2} aufgespannt ist. Die Radien r_{M1}, r_{M2} können jeweils konstant oder individuell einstellbar sein. Um den Zielort M₁, der sich zum Beispiel in einem Einkaufszentrum befindet, kann ein größerer Umkreis verlaufen als um einen Zielort M₂, der sich zum Beispiel an einem Wohnort des Nutzers befindet, da dieser keine langen Strecken mit den Einkäufen zurücklegen will. Folglich kann eine Ladestation M₁L₂, die am Zielort M₁ in einer gewissen Entfernung zum Zielort M₁ liegt, für den Nutzer akzeptabel sein, während eine Ladestation M₂L₂ in gleicher Entfernung zum Zielort M₂ für den Nutzer nicht mehr akzeptabel erscheint und daher außerhalb des Umkreises liegt. Der jeweilige Umkreis um einen Zielort kann automatisch vorgegeben sein oder durch den Nutzer manuell eingestellt werden. Der Zielort M_{2.1} auf der Wegestrecke W₂ repräsentiert einen Zielort, der dem zuvor erläuterten Zielort M_{1.1} auf der Wegstrecke W₁ entspricht.

Die Figur 4 stellt zudem schematisch verschiedene Ladezustände der Energiespeichereinheit 190 in Abhängigkeit von der Position des Fahrzeugs F dar. Es versteht sich, dass die Darstellung der Ladezustände die tatsächlichen Proportionen der Ladezustände lediglich skizzenhaft wiedergibt, ohne dass dabei Aussagen zu den tatsächlichen Größenverhältnissen der Ladezustände abzuleiten sind.

Die Energiespeichereinheit 190 weist eine Gesamtkapazität K_{gesamt} auf. Die Gesamtkapazität K_{gesamt} ist am Ausgangsort einer Route mit einer gewissen gespeicherten, verfügbaren Energiemenge belegt, welche der ersten Antriebseinheit 192 und den weiteren Verbrauchern für die Wegstrecke W₁ zur Verfügung steht, d.h. genutzt werden kann. Die Gesamtkapazität K_{gesamt} ist außerdem mit einer nicht verfügbaren Energiemenge belegt, welche aus technischen Gründen in der Energiespeichereinheit 190 verbleibt.

Die verfügbare Energiemenge nimmt über die Wegstrecke W₁ ab, entlang welcher das Fahrzeug bewegt wird. Es wird angestrebt, dass die Energiespeichereinheit 190 am Zielort M₁ die an der Ladestation M₁L₁ maximal übertragbare Energiemenge EMₘₐₓ möglichst vollständig aufnehmen kann. Der Recheneinheit 110 ist die Verweildauer Vt₁ am Zielort M₁ bekannt. Für den Fall, dass es sich bei dem Zielort M₁ um ein Einkaufszentrum handelt, wird die Verweildauer Vt_{1K} relativ kurz sein, zum Beispiel etwa 60 Minuten. Für diese kurze Zeitspanne kann eine Schnellladung geeignet sein, die Energiespeichereinheit 190 bis zu einer Schnellladegrenze aufzuladen. Sollte es sich bei dem Zielort M₁ um den Wohnort des Nutzers handeln und der Recheneinheit 110 bekannt sein, dass die Verweildauer Vt_{1L} relativ lang ist, zum Beispiel neun Sunden, kann die Energiespeichereinheit 190 mit geringerer Stromstärke bis zum Erreichen der Gesamtkapazität K_{gesamt} geladen werden. Die Recheneinheit 110 wählt in Kenntnis der Verweildauer automatisch ein geeignetes Ladeverfahren, mit welchem die Energiespeichereinheit 190 die an der Ladestation M₁L₁ maximal übertragbare Energiemenge EMₘₐₓ möglichst vollständig aufnehmen kann.

Die Energiespeichereinheit 190 wird durch entsprechendes Steuern der ersten Antriebseinheit 192 mittels der Steuereinheit 150 über die Wegstrecke W₁ so weit entleert, dass die an der Ladestation M₁L₁ maximal übertragbare Energiemenge EMₘₐₓ aufgenommen werden kann. Dabei kann die Energiespeichereinheit 190 vollständig aufgeladen werden. Die am Zielort M₁ noch vorhandene Restmenge der gespeicherten, verfügbaren Energie ergibt zusammen mit der an der Ladestation M₁L₁ aufgenommenen Energiemenge EMₘₐₓ eine Energiemenge, welche für das Zurücklegen der Wegstrecke W₂ zur Verfügung steht.

Die gezeigte Schnellladegrenze stellt einen Schwellenwert dar, bis zu welchem die Energiespeichereinheit 190 mit einem Schnellladegerät aufgeladen werden kann. Der Schwellenwert kann zum Beispiel 80 % der Gesamtkapazität K_{gesamt} der Energiespeichereinheit 190 betragen. Höhere Werte sind mit einem Schnellladegerät zum Verhindern von Überlastungen derzeit nicht möglich.

In einer anderen Ausführungsform der Erfindung kann die Energiespeichereinheit vollständig entladen werden, d.h. die Energiespeichereinheit weist keine Energiemenge auf, die aus technischen Gründen in der Energiespeichereinheit verbleiben muss.

Das Verfahren ist nicht auf Hybridelektrofahrzeuge beschränkt, sondern ist zum Beispiel bei Elektrofahrzeugen anwendbar. Energiequelle eines Elektrofahrzeugs ist eine Energiespeichereinheit, in welcher Energie für den Elektromotor zum Antrieb des Fahrzeugs sowie für weitere Verbraucher gespeichert wird. Energie ist im Elektrofahrzeug ein knappes Gut, daher sind Elektrofahrzeuge auf effizientes Nutzen der in der Energiespeichereinheit gespeicherten Energie angewiesen.

Dazu wird, wie zuvor erläutert, von einem ermittelten Zielort ausgehend eine Wegstrecke bestimmt, welche mit einer am Zielort aufzunehmenden, maximal übertragbaren Energiemenge zurückgelegt werden kann. Eine Steuereinheit regelt, wie zuvor erläutert, unter Zuhilfenahme einer Recheneinheit den Energiebedarf der ersten Antriebseinheit und der weiteren Verbraucher, so dass das Elektrofahrzeug eine Wegstrecke von einer aktuellen Position zu einem Zielort mit der in der Energiespeichereinheit gespeicherten Energie zurücklegen kann. Die Steuereinheit kann zudem eingerichtet sein, unter Zuhilfenahme der Recheneinheit bereits proaktiv den Energiebedarf der ersten Antriebseinheit und der weiteren Verbraucher zu regeln, wenn die Wegstrecke zum Zielort und die am Zielort maximal übertragbare Energiemenge bekannt sind, zum Beispiel aus historischen Daten.

## Patentansprüche

1. Verfahren zum Steuern des Ladezustands einer Energiespeichereinheit (190) eines Fahrzeugs mit den folgenden Schritten:
a) Ermitteln eines Zielorts (M₁), zu welchem das Fahrzeug (F) voraussichtlich bewegt wird;
b) Ermitteln, ob am Zielort (M₁) eine für das Fahrzeug (F) geeignete Ladestation (M₁L₁) voraussichtlich verfügbar sein wird und, wenn am Zielort (M₁) eine für das Fahrzeug (F) geeignete Ladestation (M₁L₁) voraussichtlich verfügbar sein wird;
c) Bestimmen der maximalen Energiemenge (EMₘₐₓ), die an der Ladestation (M₁L₁) in die Energiespeichereinheit (190) übertragen werden kann, indem eine von der Ladestation (M₁L₁) während einer voraussichtlichen Verweildauer (Vt₁) des Fahrzeugs (F) am Zielort (M₁) lieferbare Energiemenge bestimmt wird und eine von der Energiespeichereinheit (190) am Zielort (M₁) aufnehmbare Energiemenge berechnet wird, wobei die maximale Energiemenge (EMₘₐₓ) der lieferbaren Energiemenge entspricht, wenn die lieferbare Energiemenge kleiner als die aufnehmbare Energiemenge ist, und die maximale Energiemenge (EMₘₐₓ) der aufnehmbaren Energiemenge entspricht, wenn die aufnehmbare Energiemenge kleiner als die lieferbare Energiemenge ist; und
d) Steuern eines Ladezustands der Energiespeichereinheit (190), so dass die maximale Energiemenge (EMₘₐₓ) an der Ladestation (M₁L₁) von der Energiespeichereinheit (190) aufgenommen werden kann.

2. Verfahren gemäß Anspruch 1,
bei dem beim Ermitteln, ob am Zielort (M₁) eine für das Fahrzeug (F) geeignete Ladestation (M₁L₁) voraussichtlich verfügbar sein wird, eine Fernabfrage ausgeführt wird.

3. Verfahren gemäß Anspruch 1 oder 2,
bei dem beim Ermitteln, ob am Zielort (M₁) eine für das Fahrzeug (F) geeignete Ladestation (M₁L₁) voraussichtlich verfügbar sein wird, historische Daten ausgewertet werden.

4. Verfahren gemäß einem der vorherigen Ansprüche,
bei dem das Fahrzeug (F) eine erste Antriebseinheit (192) und eine zweite Antriebseinheit (194) aufweist und die entnehmbare Energiemenge aus der Energiespeichereinheit (190) entnommen würde, wenn das Fahrzeug (F) bis zum Erreichen des Zielorts (M₁) von der ersten Antriebseinheit (192) allein angetrieben würde, soweit dies möglich ist, ohne eine Ladezustandsuntergrenze der Energiespeichereinheit (190) zu unterschreiten.

5. Verfahren gemäß einem der vorherigen Ansprüche,
bei dem beim Steuern des Ladezustands ein voraussichtlicher Energiebedarf des Fahrzeugs (F) bis zum Erreichen des Zielorts (M₁) ermittelt wird.

6. Verfahren gemäß einem der vorherigen Ansprüche,
bei dem die Ladeleistung der Ladestation (M₁L₁) unter Verwendung historischer Daten ermittelt wird.

7. Verfahren gemäß einem der vorherigen Ansprüche,
bei dem die Verweildauer (Vt₁) unter Verwendung historischer Daten ermittelt wird.

8. Verfahren gemäß einem der vorherigen Ansprüche,
bei dem das Fahrzeug (F) ein Hybridelektrofahrzeug ist.

9. Verfahren gemäß einem der vorherigen Ansprüche,
bei dem beim Ermitteln, ob am Zielort (M₁) eine für das Fahrzeug (F) geeignete Ladestation (M₁L₁) voraussichtlich verfügbar sein wird, geprüft wird, ob eine Ladestation (M₁L₁) innerhalb eines vorgegebenen Umkreises (M₁k) um den Zielort (M₁) angeordnet ist, und, wenn keine Ladestation (M₁L₁) innerhalb des vorgegebenen Umkreises (M₁k) um den Zielort (M₁) angeordnet ist, geprüft wird, ob eine Ladestation (M₁L₁) innerhalb eines vorgegebenen größeren Umkreises um den Zielort (M₁) angeordnet ist.

10. Steuerungseinrichtung zum Steuern des Ladezustands einer Energiespeichereinheit (190) eines Fahrzeugs mit den folgenden Bestandteilen:
• eine Recheneinheit (110), die zum Ermitteln eines Zielorts (M₁), zu welchem das Fahrzeug (F) voraussichtlich bewegt wird, Ermitteln, ob am Zielort (M₁) eine für das Fahrzeug (F) geeignete Ladestation (M₁L₁) voraussichtlich verfügbar sein wird und, wenn am Zielort (M₁) eine für das Fahrzeug (F) geeignete Ladestation (M₁L₁) voraussichtlich verfügbar sein wird; Bestimmen der maximalen Energiemenge (EMₘₐₓ), die an der Ladestation (M₁L₁) in die Energiespeichereinheit (190) übertragen werden kann, indem eine von der Ladestation (M₁L₁) während einer voraussichtlichen Verweildauer (Vt₁) des Fahrzeugs (F) am Zielort (M₁) lieferbare Energiemenge bestimmt wird und eine von der Energiespeichereinheit (190) am Zielort (M₁) aufnehmbare Energiemenge berechnet wird, wobei die maximale Energiemenge (EMₘₐₓ) der lieferbaren Energiemenge entspricht, wenn die lieferbare Energiemenge kleiner als die aufnehmbare Energiemenge ist, und die maximale Energiemenge (EMₘₐₓ) der aufnehmbaren Energiemenge entspricht, wenn die aufnehmbare Energiemenge kleiner als die lieferbare Energiemenge ist, eingerichtet ist; und
• eine Steuereinheit (150), die zum Steuern eines Ladezustands der Energiespeichereinheit (190), so dass die maximale Energiemenge (EMₘₐₓ) an der Ladestation (M₁L₁) von der Energiespeichereinheit (190) aufgenommen werden kann, eingerichtet ist.

## Claims

1. Method for operating a state of charge of an energy storing unit (190) of a vehicle with the following steps:
a) ascertaining a destination (M₁), to which the vehicle (F) is moved likely;
b) ascertaining, whether a charge station (M₁L₁) appropriate to the vehicle (F) will likely be available at the destination (M₁) and, if a charge station (M₁L₁) appropriate to the vehicle (F) will likely be available at the destination (M₁);
c) determining the maximum amount of energy (EMₘₐₓ), which can be transferred at the charge station (M₁L₁) into the energy storing unit (190), by determining a suppliable amount of energy from the charge station (M₁L₁) during an expected length of stay (Vt₁) of the vehicle (F) at the destination (M₁) and calculating a receivable amount of energy from the energy storing unit (190) at the destination (M₁), whereby the maximum amount of energy (EMₘₐₓ) equates to the suppliable amount of energy, if the suppliable amount of energy is less than the receivable amount of energy, and the maximum amount of energy (EMₘₐₓ) equates to the receivable amount of energy if the receivable amount of energy is less than the suppliable amount of energy, and
d) operating a state of charge of the energy storing unit (190), such that the maximum amount of energy (EMₘₐₓ) can be received at the charge station (M₁L₁) from the energy storing unit (190).

2. Method according to claim 1,
by which by ascertaining, whether a charge station (M₁L₁) appropriate to the vehicle (F) will likely be available at the destination (M₁), a remote query is executed.

3. Method according to claim 1 or 2,
by which by ascertaining, whether a charge station (M₁L₁) appropriate to the vehicle (F) will likely be available at the destination (M₁), historic data are evaluated.

4. Method according to one of the proceeding claims,
by which the vehicle (F) comprises a first drive unit (192) and a second drive unit (194) and the withdrawable amount of energy would be withdrawn from the energy storing unit (190), if the vehicle (F) would be driven by the first drive unit (192) only until achieving the destination (M₁), as far as that is possible without falling below a lower state of charge threshold of the energy storing unit (190).

5. Method according to one of the proceeding claims,
by which by operating the state of charge an expected energy requirement of the vehicle (F) until achieving the destination (M₁) is ascertained.

6. Method according to one of the proceeding claims,
by which the charge power of the charge station (M₁L₁) is ascertained by use of historic data.

7. Method according to one of the proceeding claims,
by which the length of stay (Vt₁) is ascertained by use of historic data.

8. Method according to one of the proceeding claims,
by which the vehicle (F) is a hybrid electric vehicle.

9. Method according to one of the proceeding claims,
by which by ascertaining, whether a charge station (M₁L₁) appropriate to the vehicle (F) will likely be available at the destination (M₁), it is checked, if a charge station (M₁L₁) is located within a predefined perimeter (M₁k) around the destination (M₁), and, if no charge station (M₁L₁) is located within the predefined perimeter (M₁k) around the destination (M₁), it is checked, if a charge station (M₁L₁) is located within a predefined larger perimeter around the destination (M₁).

10. Operating device for operating the state of charge of an energy storing unit (190) of a vehicle with the following components:
• a computing unit (110), which is configured to ascertain a destination (M₁), to which the vehicle (F) is moved likely, to ascertain, whether a charge station (M₁L₁) appropriate to the vehicle (F) will likely be available at the destination (M₁) and, if a charge station (M₁L₁) appropriate to the vehicle (F) will likely be available at the destination (M₁); to determine the maximum amount of energy (EMₘₐₓ), which can be transferred at the charge station (M₁L₁) into the energy storing unit (190), by determining a suppliable amount of energy from the charge station (M₁L₁) during an expected length of stay (Vt₁) of the vehicle (F) at the destination (M₁) and calculating a receivable amount of energy from the energy storing unit (190) at the destination (M₁), whereby the maximum amount of energy (EMₘₐₓ) equates to the suppliable amount of energy, if the suppliable amount of energy is less than the receivable amount of energy, and the maximum amount of energy (EMₘₐₓ) equates to the receivable amount of energy, if the receivable amount of energy is less than the suppliable amount of energy, and
• an operating unit (150), which is configured to operate a state of charge of the energy storing unit (190), such that the maximum amount of energy (EMₘₐₓ) can be received at the charge station (M₁L₁) from the energy storing unit (190).

## Revendications

1. Procédé de commande de l'état de charge d'une unité d'accumulation d'énergie (190) d'un véhicule, le procédé étant constitué des étapes suivantes :
a) déterminer une destination (M₁) que le véhicule (F) rejoindra probablement ;
b) déterminer si, à la destination (M₁), une borne de recharge (M₁L₁) convenant au véhicule (F) sera probablement disponible et, si une borne de recharge (M₁L₁) convenant au véhicule (F) sera probablement disponible à la destination (M₁) ;
c) déterminer la quantité d'énergie maximale (EMₘₐₓ) pouvant être transférée de la borne de recharge (M₁L₁) dans l'unité d'accumulation d'énergie (190), par détermination de la quantité d'énergie pouvant être fournie par la borne de recharge (M₁L₁) pendant la durée de séjour prévue (Vt₁) du véhicule (F) à la destination (M₁), et par calcul de la quantité d'énergie pouvant être absorbée par l'unité d'accumulation d'énergie (190) à la destination (M₁), la quantité d'énergie maximale (EMₘₐₓ) étant égale à la quantité d'énergie pouvant être fournie si la quantité d'énergie pouvant être fournie est inférieure à la quantité d'énergie pouvant être absorbée, et la quantité d'énergie maximale (EMₘₐₓ) étant égale à la quantité d'énergie pouvant être absorbée si la quantité d'énergie pouvant être absorbée est inférieure à la quantité d'énergie pouvant être fournie ; et
d) commander l'état de charge de l'unité d'accumulation d'énergie (190) de sorte que la quantité d'énergie maximale (EMₘₐₓ) puisse être absorbée à la borne de recharge (M₁L₁) par l'unité d'accumulation d'énergie (190).

2. Procédé selon la revendication 1,
**caractérisé en ce qu'**une interrogation à distance est effectuée pour déterminer si, à la destination (M₁), une borne de recharge (M₁L₁) convenant au véhicule (F) sera probablement disponible.

3. Procédé selon les revendications 1 ou 2,
**caractérisé en ce que** des données d'historique sont exploitées pour déterminer si, à la destination (M₁), une borne de recharge (M₁L₁) convenant au véhicule (F) sera probablement disponible.

4. Procédé selon l'une des revendications précédentes,
**caractérisé en ce que** le véhicule (F) présente une première unité motrice (192) et une deuxième unité motrice (194) et que la quantité d'énergie pouvant être prélevée de l'unité d'accumulation d'énergie (190) sera prélevée si le véhicule (F) est mû uniquement par la première unité motrice (192) jusqu'à ce qu'il atteigne la destination (M₁), dans la mesure où ceci est possible sans dépasser un seuil de charge inférieur de l'unité d'accumulation d'énergie (190).

5. Procédé selon l'une des revendications précédentes,
**caractérisé en ce que** le besoin en énergie du véhicule (F), qui sera probablement nécessaire jusqu'à ce qu'il atteigne la destination (M₁), est déterminé pour la commande de l'état de charge.

6. Procédé selon l'une des revendications précédentes,
**caractérisé en ce que** des données d'historique sont exploitées pour déterminer la capacité de charge de la borne de recharge (M₁L₁).

7. Procédé selon l'une des revendications précédentes,
**caractérisé en ce que** des données d'historique sont exploitées pour déterminer la durée de séjour (Vt₁).

8. Procédé selon l'une des revendications précédentes,
**caractérisé en ce que** le véhicule (F) est un véhicule électrique hybride.

9. Procédé selon l'une des revendications précédentes,
**caractérisé en ce que**, pour déterminer si, à la destination (M₁), une borne de recharge (M₁L₁) convenant au véhicule (F) sera probablement disponible, la présence d'une borne de recharge (M₁L₁) est vérifiée dans un périmètre spécifié (M₁k) autour de la destination (M₁) et que, si aucune borne de recharge (M₁L₁) ne se trouve dans le périmètre spécifié (M₁k) autour de la destination (M₁), la présence d'une borne de recharge (M₁L₁) est vérifiée dans un périmètre spécifié plus grand autour de la destination (M₁).

10. Dispositif de commande de l'état de charge d'une unité d'accumulation d'énergie (190) d'un véhicule, constitué des éléments suivants :
• une unité de calcul (110) configurée pour déterminer une destination (M₁) que le véhicule (F) rejoindra probablement, déterminer si, à la destination (M₁), une borne de recharge (M₁L₁) convenant au véhicule (F) sera probablement disponible et, si une borne de recharge (M₁L₁) convenant au véhicule (F) sera probablement disponible à la destination (M₁) ; déterminer la quantité d'énergie maximale (EMₘₐₓ) pouvant être transférée de la borne de recharge (M₁L₁) dans l'unité d'accumulation d'énergie (190), par détermination de la quantité d'énergie pouvant être fournie par la borne de recharge (M₁L₁) pendant la durée de séjour prévue (Vt₁) du véhicule (F) à la destination (M₁), et par calcul de la quantité d'énergie pouvant être absorbée par l'unité d'accumulation d'énergie (190) à la destination (M₁), la quantité d'énergie maximale (EMₘₐₓ) étant égale à la quantité d'énergie pouvant être fournie si la quantité d'énergie pouvant être fournie est inférieure à la quantité d'énergie pouvant être absorbée, et la quantité d'énergie maximale (EMₘₐₓ) étant égale à la quantité d'énergie pouvant être absorbée si la quantité d'énergie pouvant être absorbée est inférieure à la quantité d'énergie pouvant être fournie ; et
• une unité de commande (150) configurée pour commander l'état de charge de l'unité d'accumulation d'énergie (190) de sorte que la quantité d'énergie maximale (EMₘₐₓ) puisse être absorbée à la borne de recharge (M₁L₁) par l'unité d'accumulation d'énergie (190).
